# EUROPEAN PATENT APPLICATION

(11) **EP 3 437 817 A1**
(43) Date of publication of application: **06.02.2019**
(21) Application number: 17774653.4
(22) Date of filing: 23.03.2017
(51) Int. Cl.: B29B 9/04, B29B 7/48, B29C 45/00, B29C 47/14, B29C 47/92

(54) **METHOD FOR MANUFACTURING INJECTION MOLDING FEEDSTOCK AND METHOD FOR MANUFACTURING RESIN MOLDING**

(30) Priority: 31.03.2016 JP 2016071751
(71) Applicant: TBM Co., Ltd., Chuo-ku, Tokyo 104-0061 (JP)
(72) Inventor: SUMI, Yuichiro, Tokyo 168-0064 (JP)
(74) Representative: Papula Oy
(86) International application number: PCT/JP2017/011681
(87) International publication number: WO 2017/170112

(57) **Abstract**

Provided are a method for manufacturing an injection molding material enabling easy molding while using a die, and a method for manufacturing a resin molding using the injection molding material. The method for manufacturing an injection molding material includes: a molding step of molding a resin composition including 50 mass % or more of inorganic particles with respect to mass of the whole composition and thermoplastic resin into a sheet through a die with an extruder; an evaluating step of evaluating thickness of a sheet-like resin extruded from the die; and a selecting step of selecting the sheet-like resin as an injection molding material on the basis of a result of evaluation.

## Description

### Field

The present invention relates to a method for manufacturing an injection molding material, and a method for manufacturing a resin molding.

### Background

Methods for obtaining an injection molding material used as conventional methods include a method of kneading and plasticizing a resin composition with an extruder, extruding the resin composition as a strand from a die provided with a plurality of small holes and attached to the outlet of the extruder, that is, a strand die, cooling and solidifying the strand, and cutting the strand into pellets to obtain strand pellets. The methods also include a method of cutting the strand in a molten state into hot-cut pellets.

However, in the case of using a resin composition highly filled with a filler, the viscosity of the resin composition is not easily reduced by kneading and the resin composition has low flowability. For this reason, the resin composition is difficult to extrude and cut into pellets. For example, even when the resin composition is extruded from the small holes of the strand die, the material is broken. For this reason, it is considered in prior art that such a resin composition inevitably requires subjecting to a method of kneading the resin composition little by little with a pressure kneader or the like, and grinding the resin composition.

For example, Patent Literature 1 discloses a method of kneading and extruding a resin composition in a state in which the outlet of the extruder is opened without being provided with a strand die described above, to manufacture an injection molding material.

### Citation List

### Patent Literature

Patent Literature 1: Japanese Patent Application Laid-Open Publication No. 8-1663

### Summary

### Technical Problem

However, in the case where an injection molding material is manufactured without attaching a strand die, it is feared that the strength of the material is not sufficient.

In addition, an injection molding material highly filled with a filler is not always easy to mold, even when it exhibits a good kneaded state in kneading.

The present invention has been made in consideration of the actual circumstances as described above. An object of the present invention is to provide a method for manufacturing an injection molding material that is easy to mold, while using a die extruding a composition in a sheet shape, and a method for manufacturing a resin molding using the injection molding material.

### Solution to Problem

The inventors of the present invention have found that a good injection molding material can be selected on the basis of the thickness of a resin molding molded through a die extruding the composition in a sheet shape, such as a flat die, and made the present invention. More specifically, the present invention provides the following.
(1) The present invention is a method for manufacturing an injection molding material, the method comprising: a molding step of molding a resin composition including 50 mass % or more of inorganic particles with respect to mass of the whole composition and thermoplastic resin into a sheet through a die with an extruder; an evaluating step of evaluating thickness of a sheet-like resin extruded from the die; and a selecting step of selecting the sheet-like resin as an injection molding material on the basis of a result of evaluation.
(2) In addition, the present invention is the method according to (1), wherein the selecting in the selecting step is performed when standard deviation of the thickness of the resin falls within ±20% with respect to an average thickness of the resin in the result of evaluation of the thickness of the sheet-like resin.
(3) In addition, the present invention is the method according to (1) or (2), further comprising: a step of grinding the selected sheet-like resin, or a step of gelling the selected sheet-like resin and granulating the gelled resin.
(4) In addition, the present invention is the method according to (3), further comprising a step of acquiring the resin after the grinding step or the granulating step, as the injection molding material formed of resin in a pellet state.
(5) In addition, the present invention is a method for manufacturing a resin molding, the method comprising: a step of manufacturing an injection molding material by the method according to any one of (1) to (4); and a step of subjecting the manufactured injection molding material to injection molding.
(6) In addition, the present invention is the method according to (5), further comprising a step of putting resin formed of part of the resin composition other than the sheet-like resin into the extruder together with the injection molding material.
(7) In addition, the present invention is the method according to (5) or (6), further comprising a step of putting the injection molding material into the extruder through a vibratable hopper.
(8) In addition, the present invention is a method for manufacturing a resin molding, the method comprising: a molding step of molding a resin composition including 50 mass % or more of inorganic particles with respect to mass of the whole composition and thermoplastic resin into a sheet through a die with an extruder; an evaluating step of evaluating thickness of a sheet-like resin extruded from the die; and a step of determining whether the sheet-like resin is to be acquired as a molding, used as an injection molding material, or abandoned, on the basis of a result of evaluation.
(9) In addition, the present invention is a method comprising a manufacturing step of a product of a sheet-like resin molding, the manufacturing step including: a molding step of molding a resin composition including 50 mass % or more of inorganic particles with respect to mass of the whole composition and thermoplastic resin into a sheet through a die with an extruder; and an evaluating step of evaluating thickness of a sheet-like resin extruded from the die, wherein, on the basis of a result of the evaluation, an injection molding material is manufactured by grinding the sheet-like resin molding unused as a product when the sheet-like resin molding has been selected and subjected to a subsequent step, or part of the sheet-like resin molding, or gelling the sheet-like resin molding unused as a product or part of the sheet-like resin molding and granulating the gelled resin.
(10) In addition, the present invention is the method according to (9), wherein the ground or granulated resin is manufactured into the injection molding material formed of resin in a pellet state.

### Advantageous Effects of Invention

The present invention provides a method for manufacturing an injection molding material enabling easy molding using a die extruding the resin into a sheet, and a method for manufacturing a resin molding using the injection molding material.

### Description of Embodiments

The following is a detailed explanation of an embodiment of the present invention. However, the present invention is not limited to the following embodiment, but may be carried out with proper changes within a range of the object of the present invention.

### Method for Manufacturing Injection Molding Material

A method for manufacturing an injection molding material according to the present invention comprises: a molding step of molding a resin composition including 50 mass % or more of inorganic particles with respect to the mass of the whole composition and thermoplastic resin into a sheet through a die with an extruder; an evaluating step of evaluating thickness of a sheet-like resin extruded from the die; and a selecting step of selecting the sheet-like resin as an injection molding material on the basis of a result of evaluation. The injection molding material means a material used when a resin molding is manufactured by injection molding.

The method for manufacturing an injection molding material according to the present invention enables acquisition of an injection molding material enabling easy execution of injection molding, by performing evaluation on the basis of the thickness of the resin molding molded into a sheet through a die with an extruder. In this case, the resin molding molded once is used again as an injection molding material. However, as described above, even in a conventional method for acquiring an injection molding material, the resin composition is once kneaded with an extruder, extruded as a strand from a strand die, and used as pellets. For this reason, the thermal and mechanical conditions for the resin composition are not changed. The sheet-like resin acquired in the present invention is suitable for an injection molding material, as is clear from results of the example described later.

### Molding Step

In the method for manufacturing an injection molding material according to the present invention, a resin composition including 50 mass % or more of inorganic particles with respect to the mass of the whole composition and thermoplastic resin is molded into a sheet through a die with an extruder.

Generally, a resin composition (herein simply referred to as "resin composition") including 50 mass % or more of inorganic particles with respect to the mass of the whole composition and thermoplastic resin exhibits a markedly large increase in viscosity in the step of kneading necessary for the molding step. Accordingly, it is preferable that the resin composition is kneaded with sufficiently strong force. Specifically, a multi-screw extruder, such as a twin-screw extruder, is preferably used, and an extruder combined with a rotor segment is more preferably used. When the extruder used is a multi-screw extruder with a rotor segment, the extruder is particularly preferable because the extruder is capable of kneading the resin composition by action of strong shearing force with the screws. Kneading may be performed with a single-screw extruder, but kneading with a single-screw extruder requires use of a resin composition kneaded in advance before being put into the extruder.

Adjustment of the kneaded state of the resin composition can be achieved by properly adjusting the melting temperature, the rotational speed of the screws, and/or the retention time of the resin composition in the extruder and the like, according to the components of the resin composition and/or the type of the thermoplastic resin.

The die to be used is a die molding the extruded molten resin into a sheet, such as a flat die (T die) and a circular die (in the evaluating step described later, it suffices that evaluation is performed at the time when the resin is molded into a sheet for which the thickness can be measured). In addition, a screen may be provided before the die to remove foreign substances mixed into the resin composition.

The necessary quantity of the inorganic particles included in the resin composition is 50 mass% or more with respect to the mass of the whole composition, to clearly exhibit its property. The quantity of the inorganic particles equal to or higher than 70 mass% causes some difficulty in kneading. The upper limit of the quantity of the inorganic particles is preferably 90 mass% or less, more preferably 80 mass% or less. The excessive quantity of the inorganic particles tends to cause deterioration in kneadability, and reduce the quantity of the resin composition selected at the selecting step described later.

The residue of the content of the inorganic particles in the resin composition is measured by the loss and residue test method for chemical products (JIS0067-1192). In the case of using calcium carbonate, generation of carbonic acid gas should be taken into consideration.

The type of the inorganic particles included in the resin composition is not particularly limited, but examples thereof include calcium carbonate, titanium oxide, silica, clay, talc, kaolin, aluminum hydroxide, calcium sulfate, barium sulfate, mica, zinc oxide, dolomite, glass fiber, hollow glass microbeads, bentonite, and diatomaceous earth. Among them, it is preferable to use calcium carbonate. One of these substances may be used alone, or two or more of them may be used in combination. As another example, the surfaces of the inorganic particles may be reformed in advance by a conventional method to enhance the dispersibility of the inorganic particles in the resin composition.

The quantity of the thermoplastic resin included in the resin composition can properly be set in accordance with quantities of the other components (such as the quantity of the inorganic particles). The quantity of the thermoplastic resin is required to be less than 50 mass%, more preferably 40 mass% or less. The quantity of the thermoplastic resin of 30 mass% or less requires care with regard to the strength of the resin molding. The lower limit of the quantity of the thermoplastic resin is preferably 20 mass% or more. The too small quantity of the thermoplastic resin with respect to the inorganic particles tends to cause deterioration in kneadability, and reduction in quantity of the resin composition selected at the selecting step described later.

The thermoplastic resin included in the resin composition is not particularly limited, and any thermoplastic resin that can be used for ordinary injection molding materials can be used. Polymer forming such thermoplastic resin can properly be selected in accordance with the use of the molding. Examples of the polymer include polyolefin resin, such as polypropylene, high-density polyethylene, and low-density polyethylene, vinyl resin, such as polyvinyl chloride and polystyrene, polyester resin such as polyethylene terephthalate, and recycled resin. One of these polymers may be used alone, or two or more of them may be used in combination.

The resin composition described above may include assistants, such as a coloring agent, a lubricant, a coupling agent, a flowability improving agent, a dispersant, an antioxidant, an ultraviolet absorber, a stabilizer, and/or an antistatic agent, as well as the inorganic particles and thermoplastic resin including polyolefin.

### Evaluating Step

The method for manufacturing an injection molding material according to the present invention includes an evaluating step of evaluating the thickness of the sheet-like resin extruded from the die, in the molding step described above. A resin composition including 50 mass% or more of inorganic particles is not always easily subjected to injection molding thereafter, even when it exhibits favorable log data indicating the state of kneading in the molding step. The main cause is that the good kneaded state may be lost when the resin composition changes to a state in which the action of shearing force is lost, even when the flowing state of the resin composition is good while the shearing force acts in the extruder. By contrast, the present invention has the structure of evaluating the uniformity of the thickness of the sheet-like resin flowing out of the die to enable selection of the resin with a good kneaded state.

Evaluation of the thickness of the sheet-like resin is not particularly limited, as long as it evaluates the uniformity of the thickness of the sheet-like resin. For example, the numerical value relating to the average thickness of the sheet-like resin can be used as the standard of the evaluation, and the result of the evaluation can be used for the selecting step described later. More specifically, the embodiment may have a structure of calculating the standard deviation (coefficient of variation) of the thickness of the resin with respect to the average thickness of the resin, to use the calculated numerical value for the selecting step described later, as the result of the evaluation. The thickness of the resin is measured with a thickness measuring device. Examples of the thickness measuring device include an on-line type and an off-line type, and each of the types includes a contact-type and a non-contact type. A laser-type non-contact thickness measuring device or the like is suitable for the sheet-like resin including inorganic particles. However, evaluation of the thickness of the sheet-like resin is not limited thereto. For example, a certain standard may be provided for the external appearance of the sheet-like resin, and the external appearance may be checked by visual observation to evaluate the uniformity of the thickness of the sheet-like resin. Another example is using both results of the evaluation of the external appearance and the evaluation of the numerical value relating to the average thickness, to use the results for the selecting step described later.

The setting of the thickness of the sheet-like resin can properly be selected in accordance with the purpose and/or the components and/or the property (such as the melt flow rate and the molecular weight distribution) of the selected resin composition. The thickness can be adjusted by setting the lip width of the die. The thickness is preferably 200 µm to 1000 µm, more preferably 300 µm to 700 µm.

### Selecting Step

The method for manufacturing an injection molding material according to the present invention includes a selecting step of selecting the sheet-like resin as the injection molding material on the basis of a result of evaluation in the evaluating step.

The selection in the selecting step can be performed by selecting one satisfying certain standard provided for the result evaluated in the evaluating step described above. The certain standard may be a standard enabling check by visual observation of the external appearance of the thickness of the sheet-like resin, a standard of the numerical value relating to the average thickness of the sheet-like resin, or both of them. Because an injection molding material with higher moldability can be acquired with more accuracy, selection in the selecting step is preferably performed in the case where the standard deviation of the thickness of the resin falls within ±20% with respect to an average thickness of the resin in the result of evaluation of the thickness of the sheet-like resin, more preferably performed in the case where the standard deviation of the thickness of the resin falls within ±15% with respect to an average thickness of the resin, even more preferably performed in the case where the standard deviation of the thickness of the resin falls within ±10% with respect to an average thickness of the resin, and further more preferably performed in the case where the standard deviation of the thickness of the resin falls within ±5% with respect to an average thickness of the resin. As described above, the sheet-like resin satisfying the certain standard achieves a good kneaded state, and enables easy execution of injection molding.

### Grinding Step and Granulating Step

The method for manufacturing an injection molding material according to the present invention may further include the step of grinding the sheet-like resin selected in the selecting step. As another example, the method may include the step of gelling the sheet-like resin and granulating the gelled resin. The granulating step may be a step of, for example, using frictional heat in grinding and further kneading the sheet-like resin selected in the selecting step to gel the resin, and thereafter subjecting the gelled resin to hot cut to granulate the resin. As another example, forced heating may be used instead of frictional heat. A grinder and/or a granulator used for ordinary grinding and/or granulating may be used for grinding and/or granulating. The grinding form and/or granulating form is not particularly limited, but may be any form as long as the resin can be put into the injection molding device. As described above, through the grinding step and/or the granulating step, the manufactured injection molding material can be easily put into the injection molding device. In particular, with the granulating step, when the resin is put into a hopper as the injection molding material, the material can be easily put in without using a vibratable hopper.

In addition, the method for manufacturing an injection molding material may further include a step of acquiring the resin after the grinding step or the granulating step as the injection molding material formed of resin in a pellet state. A device used for ordinary pellet processing can be used for pellet processing. For example, the resin is molten with a heater, and processed into pellets of a predetermined shape. As another example, for the resin acquired in the granulating step, the resin processed into a pellet state in the granulating step may be used as the resin in a pellet state.

As described above, the method for manufacturing an injection molding material according to the present invention enables acquisition of an injection molding material enabling easy injection molding, because resin in a good kneaded state is selected as the injection molding material. This structure enables acquisition of a molding with excellent quality.

### Method for Manufacturing Resin Molding

The present invention includes a method for manufacturing a resin molding, comprising: a step of manufacturing an injection molding material; and a step of subjecting the manufactured injection molding material to injection molding.

The step of manufacturing an injection molding material may be the same method as the method for manufacturing an injection molding material as described above, as an example.

### Injection Molding Step

The injection molding step in the present invention is a step of subjecting the manufactured injection molding material to injection molding. In the injection molding step, after the injection molding material described above is put into a hopper, the material is molten while being caused to move in a heating cylinder surrounded with a heater with a rotating screw. The conditions in this step may be the same conditions as those of the molding step in the method for manufacturing an injection molding material as described above. In addition, in injection molding, melting (plasticization) is mainly performed. The heated and molten injection molding material is injected into a die corresponding to a desired molding, and thereafter cooled and solidified to acquire a resin molding. The injection molding device is not particularly limited, but an existing injection molding device may be used.

The injection molding step according to the present invention may include a step of putting resin formed of part of the resin composition other than the sheet-like resin into an extruder, together with the injection molding material described above. The resin other than the sheet-like resin is thermoplastic resin in the injection molding material or resin compatible with the resin. In addition, for example, the resin other than the sheet-like resin is an end portion of the resin molding acquired in the injection molding step and removed because it deteriorates the fine appearance of the resin molding or the like.

The injection molding step according to the present invention preferably includes a step of putting the injection molding material into an extruder through a vibratable hopper. Because the sheet-like resin acquired in the method for manufacturing an injection molding material described above has a sheet-like shape, the surfaces of the resin sheets stick to each other, and the sheet-like resin is not smoothly put into the extruder. By using a vibratable hopper, the resin sheets are separated from each other by vibration while being put in, and the injection molding material can be put smoothly into the extruder. In particular, in the case of using the ground injection molding materials, the ground materials stick to each other and are difficult to separate from each other. Use of a vibratable hopper is preferable because it enables easy separation of each mass of the ground materials of the injection molding material, and easy kneading in the extruder. The vibration mechanism of the hopper is not particularly limited.

The method for manufacturing a resin molding according to the present invention may include a molding step of molding a resin composition including 50 mass % or more of inorganic particles with respect to the mass of the whole composition and thermoplastic resin into a sheet through a die with an extruder; an evaluating step of evaluating thickness of a sheet-like resin extruded from the die; and a step of determining whether the sheet-like resin is to be acquired as a molding, used as an injection molding material, or abandoned, on the basis of a result of evaluation. The term "resin molding" herein means a sheet-like resin selected as resin to be used an end product (that is, subjected to the subsequent steps after the evaluating step), not resin selected to be used as the injection molding material or abandoned.

The molding step and the evaluating step may be the same as the molding step and the evaluating step in the method for manufacturing an injection molding material described above, as an example.

### Determining Step

The determining step in the present invention is a step of determining whether the sheet-like resin is to be acquired as a molding, used as an injection molding material, or abandoned, on the basis of a result of evaluation in the evaluating step described above.

In the determination in the determining step, the determination may be performed on the basis of certain standard provided for the result of evaluation in the evaluating step described above. The certain standard may be, for example, a standard enabling check by visual observation for the external appearance of the thickness of the sheet-like resin, a standard of the numerical value relating to the average thickness of the sheet-like resin, or both of them. For example, in the determination step, it may be determined to acquire the sheet-like resin as a molding, when the standard deviation of the thickness of the resin falls within ±5% with respect to an average thickness of the resin in the result of evaluation of the thickness of the sheet-like resin. It may also be determined to use the sheet-like resin as an injection molding material, when the standard deviation of the thickness of the resin falls within a range of larger than ±5% to ±20% with respect to an average thickness of the resin. It may also be determined to abandon the sheet-like resin, when the standard deviation of the thickness of the resin exceeds ±20% with respect to an average thickness of the resin.

When it is determined to use the sheet-like resin as an injection molding material, a resin molding can be manufactured by performing the "injection molding step" described above using the injection molding material. When the evaluation result of the sheet-like resin fails to satisfy the predetermined standard and abandonment of the sheet-like resin is determined, the molding step, the evaluating step, and the selecting step are repeated until it is determined to acquire the sheet-like resin as a molding or it is determined to use the sheet-like resin as an injection molding material, to manufacture a resin molding. This structure enables manufacturing of a sheet-like molding with good quality, or a resin molding enabling easy execution of injection molding.

As described above, the method for manufacturing a resin molding according to the present invention enables direct manufacturing of a sheet-like molding with good quality, or a resin molding enabling easy execution of injection molding, by evaluation of the thickness of the sheet-like resin.

The use of the acquired resin molding is not particularly limited, but may be any use of a resin molding acquired by conventional injection molding.

The method for manufacturing an injection molding material according to the present invention may have a structure including a manufacturing step of manufacturing a product of a sheet-like resin molding and including the molding step of molding a resin composition including 50 mass % or more of inorganic particles with respect to mass of the whole composition and thermoplastic resin into a sheet through a die with an extruder, and the evaluating step of evaluating thickness of a sheet-like resin extruded from the die. In the manufacturing step, the injection molding material may be manufactured by grinding the sheet-like resin molding unused as a product when the sheet-like resin molding has been selected and subjected to the subsequent steps, or part of the sheet-like resin molding, or gelling the sheet-like resin molding unused as a product or part of the sheet-like resin molding and granulating the gelled resin.

The step of manufacturing a product of the sheet-like resin molding may generate the sheet-like resin molding or part of the sheet-like resin molding unused as a product in the subsequent steps (such as a stretching step), although it has been obtained as the sheet-like resin molding in the evaluating step. Examples of the sheet-like resin molding unused as a product include a resin molding determined as improper as a product due to failure in the stretching step or the like. Examples of the part of the sheet-like resin molding unused as a product include a part (for example, a part, such as an end portion (edge) generated by cutting during stretching) cut away from the resin molding serving as a main member of the product in manufacturing. The method for manufacturing an injection molding material according to the present embodiment may have a structure of subjecting such sheet-like resin molding unused as a product or such part of the sheet-like resin molding unused as a product to the grinding and/or the granulating described above, to use it as the injection molding material. The grinding and the granulating may be performed in the same manner as the grinding step and the granulating step in the method for manufacturing an injection molding material described above.

### Example

### Example

A material mainly including 60% of calcium carbonate powder (number average grain size of 5.15 µm) as inorganic particles and 40% of polypropylene resin was kneaded with a twin-screw extruder, caused to pass through a 100 mesh screen, and thereafter extruded from a T die with a lip width of 1000 µm, to obtain sheet-like resins (set thickness: 300 µm). The sheet-like resins were measured with a thickness measuring device (non-contact thickness measuring device with a laser sensor) installed in the manufacturing line, to select and recover the sheet-like resin with a standard deviation of the thickness of the resin falling within ±10% with respect to the average thickness of the resin. The selected sheet-like resin was ground with a grinder (motor of 11KW). The ground substance (with longer sides having a length of 2 mm to 10 mm) was used as the injection molding material, and dried with hot air for 2 hours at 80°C. Thereafter, the material was subjected to injection molding with a small electric injection molding device (clamping pressure of 18 tf) with the screw diameter of φ16 under the injection molding conditions illustrated in Table 1 below, to mold a resin molding. The injection molding material (ground substance) was directly put into the screw (hungry feeding), because it had a shape of scales overlapping each other and easily causing bridge in the hopper.

**Table 1**

| Drying Conditions | 80°C×2h or more (drying with hot air) |
|---|---|
| Resin Molding Shape | 80×10×4.0 (mm) |
| Molding Temperature (°C) | 210 |
| Die Temperature (°C) | 47 to 49 |
| Injection Pressure (MPa) | 117 to 122 |
| Injection Velocity (mm/s) | 20 |
| Holding Pressure (MPa) | 145 |
| Number of Rotations of Screw (rpm) | 250 |

In the injection molding work, the injection molding work was stably performed without any problem even by manual feeding, and a resin molding with good quality was obtained without flow marks. In addition, a resin molding with good quality was obtained also in the case where the sheet-like resin acquired under the same conditions was visually observed and the sheet-like resin satisfying the certain standard was subjected to injection molding.

Table 2 illustrates results of a tensile test for resin moldings prepared as described above under the following conditions.
Tensile Test
Test apparatus type: Strograph VGF
Load cell capacity: 20 KN
Distance between chucks: 30.0 mm
Initial load: 0.5%
Method for measuring modulus of elasticity: displacement and secant method
Temperature and humidity: 23.0°C and 50.0%
Test speed: 5 mm/min

**Table 2**

| | Width (mm) | Thickness (mm) | Modulus of Elasticity (mPa) | Maximum Point Strength (mPA) | Maximum Point Elongation (%) | Breaking Point Strength (mPa) |
|---|---|---|---|---|---|---|
| Resin Molding Sample 1 | 9.92 | 3.92 | 2597.3 | 16.05 | 2.64 | 13.55 |
| Resin Molding Sample 2 | 9.92 | 3.92 | 2129.3 | 16.23 | 3.33 | 13.70 |

As is clear from the results in Table 2, the resin moldings according to the present example exhibited modulus of elasticity, maximum point strength, maximum point elongation, and breaking point strength enabling the resin moldings to be sufficiently used as products. In addition, it was verified that substantially equal results were obtained for a tensile test for the sheet-like resin before grinding and the resin molding after injection molding. The result proves that a resin molding with excellent strength can be acquired from the injection molding material, even when the injection molding material according to the present embodiment is ground substance obtained by grinding the sheet-like resin molded with a T die.

## Claims

1. A method for manufacturing an injection molding material, the method comprising:
a molding step of molding a resin composition including 50 mass % or more of inorganic particles with respect to mass of the whole composition and thermoplastic resin into a sheet through a die with an extruder;
an evaluating step of evaluating thickness of a sheet-like resin extruded from the die; and
a selecting step of selecting the sheet-like resin as an injection molding material on the basis of a result of evaluation.

2. The method according to claim 1, wherein the selecting in the selecting step is performed when standard deviation of the thickness of the resin falls within ±20% with respect to an average thickness of the resin in the result of evaluation of the thickness of the sheet-like resin.

3. The method according to claim 1 or 2, further comprising: a step of grinding the selected sheet-like resin, or a step of gelling the selected sheet-like resin and granulating the gelled resin.

4. The method according to claim 3, further comprising a step of acquiring the resin after the grinding step or the granulating step, as the injection molding material formed of resin in a pellet state.

5. A method for manufacturing a resin molding, the method comprising:
a step of manufacturing an injection molding material by the method according to any one of claims 1 to 4; and
a step of subjecting the manufactured injection molding material to injection molding.

6. The method according to claim 5, further comprising a step of putting resin formed of part of the resin composition other than the sheet-like resin into the extruder together with the injection molding material.

7. The method according to claim 5 or 6, further comprising a step of putting the injection molding material into the extruder through a vibratable hopper.

8. A method for manufacturing a resin molding, the method comprising:
a molding step of molding a resin composition including 50 mass % or more of inorganic particles with respect to mass of the whole composition and thermoplastic resin into a sheet through a die with an extruder;
an evaluating step of evaluating thickness of a sheet-like resin extruded from the die; and
a step of determining whether the sheet-like resin is to be acquired as a molding, used as an injection molding material, or abandoned, on the basis of a result of evaluation.

9. A method for manufacturing a product of a sheet-like resin molding, the method comprising:
a molding step of molding a resin composition including 50 mass % or more of inorganic particles with respect to mass of the whole composition and thermoplastic resin into a sheet through a die with an extruder; and
an evaluating step of evaluating thickness of a sheet-like resin extruded from the die, wherein
on the basis of a result of the evaluation, an injection molding material is manufactured by
grinding the sheet-like resin molding unused as a product when the sheet-like resin molding has been selected and subjected to a subsequent step, or part of the sheet-like resin molding, or
gelling the sheet-like resin molding unused as a product or part of the sheet-like resin molding and granulating the gelled resin.

10. The method according to claim 9, wherein the ground or granulated resin is manufactured into the injection molding material formed of resin in a pellet state.
